# EUROPÄISCHE PATENTSCHRIFT

(11) **EP 1 020 711 B1**
(45) Veröffentlichungstag und Bekanntmachung des Hinweises auf die Patenterteilung: **09.04.2003**
(21) Anmeldenummer: 99100712.1
(22) Anmeldetag: 15.01.1999
(51) Int. Cl.: G01F 1/66

(54) **Durchflussmessgerät für fluide Medien**
Flowmeter for fluids
Débimètre pour fluides

(43) Veröffentlichungstag der Anmeldung: 19.07.2000
(73) Patentinhaber: Körner, Hans-Holger, 23758 Oldenburg in Holstein (DE)
(72) Erfinder: Körner, Hans-Holger, 23758 Oldenburg in Holstein (DE)
(74) Vertreter: Glawe, Delfs, Moll & Partner

(56) Entgegenhaltungen:
- EP-A- 0 202 583
- EP-A- 0 682 234
- EP-A- 0 890 826
- US-A- 4 140 012
- US-A- 5 463 906

## Beschreibung

Die Ausbreitungsgeschwindigkeit von bestimmten Wellen, insbesondere Schallwellen, in einem fluiden Medium ist abhängig von dessen Relativgeschwindigkeit. Diese Erscheinung nutzt man in Ultraschallmeßgeräten zur Durchflußmessung. Das Gerät enthält eine von dem Medium durchströmte Meßstrecke, an deren einander gegenüberliegenden Enden entsprechende Geber bzw. Empfänger vorgesehen sind. Die Meßstrecke darf im Hinblick auf die zu erzielende Genauigkeit nicht sehr kurz sein. Erstreckt sie sich in Längsrichtung zwischen den Zu- und Ablaufstutzen des Meßgeräts (EP-A-392 294), gelangt man zu einer großen Baulänge, verlegt man die Meßstrecke außerhalb der die Stutzen verbindenden Flucht (EP-B-88 235). Das gilt auch dann, wenn die Meßstrecke zwar innerhalb dieser Flucht aber quer dazu angeordnet wird (EP-A-681 162). Dabei ist es bekannt (US-A-4 140 012), im Gehäuse neben dem quer angeordneten Meßrohr Seitenkanäle auszubilden, die einerseits mit je einem Stutzen und andererseits mit je einer Verteilkammer an den beiden Enden des Meßrohrs in Verbindung stehen. Das Gehäuse ist diagonal geteilt und enthält in der Teilungsebene eine Trennwand, die den zufuhrseitigen Seitenkanal und die zugehörige Verteilkammer von dem abfuhrseitigen trennt und von dem Meßrohr durchquert ist. Die Meßgeber und -empfänger sind in gesonderten Gehäuseöffnungen fluchtend mit dem Meßrohr angeordnet. Wenn zur Änderung des Meßbereichs das Meßrohr ausgewechselt werden muß, muß das Gehäuse insgesamt demontiert werden und zu diesem Zweck aus der zugehörigen Leitungsstrecke herausgenommen werden. Dies ist höchst umständlich. Die relative Lage der Geber, Empfänger sowie der Meßstrecke zueinander wird durch die Montagegenauigkeit des Gehäuses beeinflußt. Eine Eichung ist daher erst nach vollständiger Montage des Geräts möglich. Die Meßgenauigkeit kann durch Lageänderung der Geber und Empfänger gegenüber dem Gehäuse sowie der Lage der Gehäuseteile und des Meßrohres zueinander beeinträchtigt werden. Die Verbindung aller dieser Teile miteinander bedarf daher der Sicherung und Plombierung.

Der Erfindung liegt die Aufgabe zugrunde, ein Durchflußmeßgerät in der im Oberbegriff des Anspruchs 1 (entsprechend US-A-4 140 012) genannten Art zu schaffen, das kurze und einfache Bauweise mit leichter Handhabbarkeit verbindet.

Die erfindungsgemäße Lösung liegt in den Merkmalen des Anspruchs 1 und vorzugsweise denjenigen der Unteransprüche.

Danach bilden das Meßrohr, die Verteilkammern und die Seitenkanäle Teile einer von dem Gehäuse gesonderten und als Einheit montierbaren Kapsel. Zwar ist es von mechanischen Durchflußmeßgeräten bekannt (EP-B-682 234), den Meßsensor (beispielsweise ein Flügelrad) ggf. zusammen mit einem Zählwerk als selbständige Kapsel auszubilden, die als Einheit in das Gerätegehäuse eingesetzt werden kann. Jedoch konnte dieser Gedanke nicht ohne weiteres auf Ultraschallzähler übertragen werden, weil bei diesen die an entgegengesetzten Seiten befindlichen Geber bzw. Empfänger durch Gehäuseteile, nämlich Kanäle, Verteilkammern, und ggf. das Meßrohr, voneinander getrennt sind und daher nicht ohne weiteres zu einer Einheit zusammengeschlossen werden können. Dies wird erst durch den Erfindungsgedanken ermöglicht, sowohl die Kanäle, als auch die Verteilkammern und das Meßrohr in die Kapseleinheit einzubeziehen. *Lediglich bei einem einfach aufgebauten Ultraschall-Durchflußmesser, bei dem die Meßkammer im wesentlichen nur eine Fortsetzung der Rohrleitung ist, in die der Durchflußmesser eingesetzt ist, ist die gesamte Meßeinheit als herausnehmbares Teil ausgebildet (EP-A-0 890 826). Da die Geber und Empfänger den Strom behindern würden, sind sie zusammen mit Reflektionseinrichtungen am Rand der Meßkammer angeordnet. Der Ultraschall wird dabei auf seinem Weg vom Geber zum Empfänger mehrfach reflektiert und verläuft schräg durch die Meßkammer. Heim erfindungsgemäßen Ultraschall-Durchflußmesser ist dagegen ein einfacher Meßweg, nämlich eine gerade Strecke möglich.*

*Die Erfindung erschöpft sich auch nicht darin, daß das Gehäuse kurz und einfach aufgebaut ist und ohne die empfindlichen Meßbestandteile installiert werden kann, die Handhabung einfach ist, weil bei Wartung oder Änderung des Meßbereichs einfach die Kapsel ausgetauscht werden kann, und es in vielen Fällen möglich sein wird, die Eichung ausschließlich an der Kapsel vorzusehen.*

### Vielmehr wird auch folgendes Problem gelöst.

*Die an den entgegengesetzten* Enden *der Kapsel vorgesehenen Geber bzw. Empfänger werden häufig jeweils kabelversorgt sein, beispielsweise zur Energieversorgung oder zur Signalabführung. Da die außerhalb des Geräts liegenden Kabel beschädigungseensibel sind, ist man bestrebt, die Zahl der Kabeleinführungen in das Gerät zu verringern und die freiliegen* *den Kabelstrecken zu reduzieren. Dieses Ziel erreicht die Erfindung dadurch, daß das Kapselmittelstück, welches die Kanäle bildet, außerhalb der mit der Kapselaufnahme zusammenwirkenden, gesondert und vollständig abgedichteten Öffnungen mediumfreie Räume mit der Kapselaufnahme einschließt, durch die die Kabel wenigstens eines kabelversorgten Endstücks der Kapsel zur anderen Seite der Kapsel hin geführt sind, wo sie gemeinsam mit den Kabeln des anderen Kapselendstücks aus dem Gerät herausgeführt werden können. Es können auch die Kabel beider Kapselendstücke durch diese Räume zu einer an dritter Stelle gelegenen Kabelabführungsstelle geführt werden. In jedem Falle dienen diese Räume oder innerhalb des Mittelstücks der Kapsel mit diesen Räumen verbundene Räume zur geschützten und trockenen Führung von Kabeln.*

Vorteilhafterweise ist die Kapselaufnahme beiderseits offen, so daß sie zwei einander entgegengesetzt liegende Öffnungen aufweist. Mindestens aus einer dieser Öffnungen wird die Kapsel im allgemeinen herausragen. Bei symmetrischer Anordnung, die im allgemeinen Vorteile hat, kann sie mit beiden ihrer Enden aus den Öffnungen herausragen.

Im allgemeinen wird es erforderlich sein, die Geber/Empfänger oder deren Aufnahmeräume an den Enden der Kapsel durch Deckel zu sichern. Diese können zwar in beliebiger Weise mit dem übrigen Teil der Kapsel verbunden sein, um mit dieser als Einheit gehandhabt werden zu können. Falls sie von Innendruck beaufschlagt sind, werden sie aber zweckmäßigerweise zusätzlich mit dem Gehäuse verbunden, um die aus dem Innendruck resultierenden Kräfte direkt auf dieses übertragen zu können. Ferner werden sie nach einem besonderen Merkmal der Erfindung durch diejenigen Mittel an der Kapsel gesichert, die auch die Kapsel in der Aufnahme des Gehäuses sichern. Dadurch wird nicht nur die Konstruktion vereinfacht, sondern auch ermöglicht, mit lediglich einer Sicherung und Plombierung für die gesamte Kapsel auszukommen.

Die Erfindung wird im folgenden näher unter Bezugnahme auf die Zeichnung erläutert, die ein vorteilhaftes Ausführungsbeispiel veranschaulicht. Es zeigen:
- Fig. 1: einen Schnitt längs durch das Gehäuse und die Kapsel;
- Fig. 2: einen Schnitt quer zum Gehäuse und längs zur Kapsel;
- Fig. 3: eine Schnittansicht der Kapsel gemäß Linie III-III der Fig. 2; und
- Fig. 4: einen Schnitt durch eine weitere Ausführungsform.

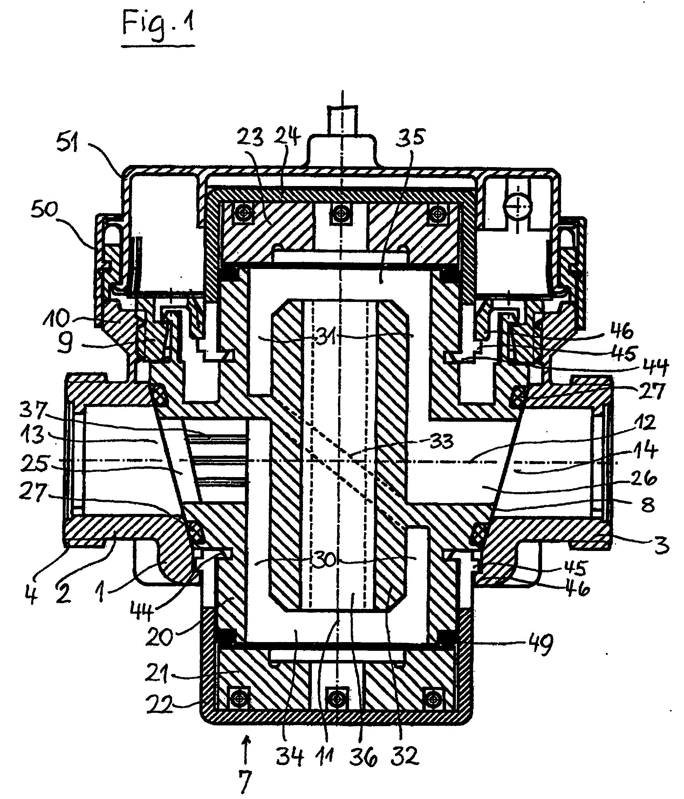

Es wird zunächst auf die Ausführungsform gemäß Fig. 1 bis 3 bezug genommen. Das Gehäuse 1 umfaßt einen Zulaufstutzen 2 und einen Auslaufstutzen 3, die an gegenüberliegenden Seiten des Gehäuses fluchtend angeordnet sind. Man kann sie auch - wie bekannt - an derselben Seite des Gehäuses neben- oder ineinanderliegend anordnen. Solche und andere Ausführungsalternativen des Gehäuses sollen vom Erfindungsgedanken umfaßt sein. Die Stutzen zeigen im dargestellten Beispiel Anschlußgewinde 4 zur Verbindung mit anschließenden Rohren. Es versteht sich, daß die Stutzen auch in anderer Weise ausgebildet sein können. Beispielsweise können sie jeweils ein Abschlußorgan enthalten, das dazu dient, den jeweiligen Leitungszweig abzusperren, um eine Montage oder Auswechslung der Meßkapsel zu ermöglichen.

Zwischen den Stutzen 2, 3 bildet das Gehäuse 1 eine Aufnahme für die Kapsel 7. Die Aufnahme wird von einer die Kapsel passend aufnehmenden Bohrung 8 mit Einrichtungen zum Festhalten der Kapsel in dieser Bohrung gebildet. Diese Einrichtungen werden im gezeigten Beispiel einerseits von einem Haltering 9, der über Gewinde, Bajonett oder dergleichen mit einem Kragen 10 der Aufnahme zusammenwirkt, und der Konizität der Bohrung 8 gebildet.

Die Achse 11 der Bohrung 8 kreuzt sich rechtwinklig mit der Achse 12 der Stutzenbohrungen 13, 14. Diese öffnen sich daher an gegenüberliegenden Stellen der Bohrung 8.

Die Kapsel 7 besteht aus einem Mittelstück 20, einem unteren Endstück 21 mit unterem Deckel 22 sowie einem oberen Endstück 23 mit oberem Deckel 24. Das Mittelstück 20 enthält Öffnungen 25, 26, die unmittelbar an die Stutzenöffnungen 13, 14 anschließen, wenn die Kapsel in die Aufnahme eingesetzt ist und ist zumindest im Bereich der Öffnungen passend zu der Bohrung 8 ausgebildet, so daß sie sicher und in bestimmter Position in der Bohrung 8 gehalten ist. Die im Hinblick auf die Achsübereinstimmung der Öffnungen erwünschte Ausrichtung der Kapsel wird durch formschlüssig zusammenwirkende Vorsprünge 28 und Vertiefungen 29 an dem Mittelstück bzw. der Kapselaufnahme sichergestellt. Die zusammenwirkenden Öffnungspaare 13, 25 bzw. 14, 26 werden jeweils von einem Dichtungsring umschlossen, der die Öffnungsverbindung vollständig dicht abschließt.

Die Kapselöffnungen 25, 26 stehen mit einem Ringraum 30, 31 in Verbindung, der das Meßrohr 32 umschließt, das durch eine Diagonalwand 33 innerhalb der Kapsel gehalten ist, wobei die Diagonalwand die einerseits mit der Zulauföffnung 25 und andererseits mit der Auslauföffnung 26 verbundenen Teile 30 bzw. 31 des Ringraums voneinander trennt. Diese Teile 30, 31 des Ringraums bilden die sogenannten Seitenkanäle. Sie verlaufen im Ausführungsbeispiel gegenparallel zur Meßstrecke, d.h. werden gegensinnig zu dieser durchströmt. Je nach Ausführung können sie von der parallelen Ausrichtung abweichen; diese ist aber vorteilhaft zur Erzielung einer kurzen Baulänge. Die Seitenkanäle führen im dargestellten Ausführungsbeispiel von den Enden des Mittelstücks zu dessen Mitte und sind gleich lang. Das muß nicht so sein. Wenn die Öffnungen 25, 26 einem der Enden des Mittelkörpers näher liegen als dem anderen, sind die Seitenkanäle unterschiedlich lang. Einer von ihnen kann bis auf Null verkürzt sein. Die Enden des Meßrohrs 32 enden in Abstand von den stirnseitigen Enden des Mittelstücks, so daß dort Verteilkammern 34, 35 entstehen. Der Strömungsweg des Mediums führt daher von der Bohrung 13 des Zulaufstutzens durch die Zulauföffnung 25 der Kapsel in den Ringraumteil 30, durch die untere Verteilkammer 34 und die Meßstrecke 36 zu dem Verteilraum 35 und durch den Ringraumteil 31 und die auslaufseitige Öffnung 26 der Kapsel in die Bohrung 14 des Auslaufstutzens.

Die Anordnung ist symmetrisch, da die Achse 11 der Kapsel und der Aufnahme die gemeinsame Achse 12 der Stutzenbohrungen rechtwinklig schneidet. Dies ist aber nicht unbedingt erforderlich. Beispielsweise könnte die Achse 11 zu der Achse 12 ein wenig geneigt oder seitlich zu ihr versetzt sein. Wenn die Stutzen 2, 3 nicht gegenüberliegend angeordnet sind, kann die Ausbildung der Strömungskanäle innerhalb der Kapsel gleichwohl dem dargestellten Ausführungsbeispiel entsprechen, wenn die erforderlichen Strömungsumführungen im Gehäuse vorgesehen sind. Jedoch besteht auch die Möglichkeit, die Kanalanordnung innerhalb der Kapsel selbst abweichend von der Darstellung zu gestalten, und zwar vorzugsweise so, daß sich in der Meßstrecke die für die Meßzwecke am besten geeignete Strömung ergibt. Beispielsweise können zur Beeinflussung der Strömung Leitflächen innerhalb der Kanäle untergebracht werden, wie sie bei 37 in der zulaufseitigen Öffnung 25 der Kapsel angedeutet sind.

Die Endstücke 21, 23 enthalten nicht näher bezeichnete Komponenten zur Erzeugung bzw. Aufnahme eines Meßsignals und sind durch eine Membran und Dichtringe 49 gegenüber den Stirnenden des Mittelstücks 20 abgedichtet. Ihre Deckel 22, 24 sind durch bei 44 angedeutete Schnappverbindungen mit dem Mittelstück verbunden, so daß die Kapsel als Einheit gehandhabt werden kann. In der Einbaustellung gesichert werden die Dekkel dadurch, daß sie mittels eines Kragens 45 hinter einen entsprechenden Bund 46 der Aufnahme oder des Halterings 9 greifen. Nicht nur der Sitz des Mittelstücks in der Aufnahme, sondern auch die Deckel der Kapsel werden somit durch den Haltering 9 gesichert. Nur dieser braucht daher auch plombiert zu werden.

Dem Haltering 9 ist mittels eines Verbindungsrings 50 ein weiterer Deckel 51 aufgesetzt, der gewünschtenfalls die Kabeleinführung 52 zur Kapsel 7 abdeckt und auch weitere Kabelführungen enthalten kann.

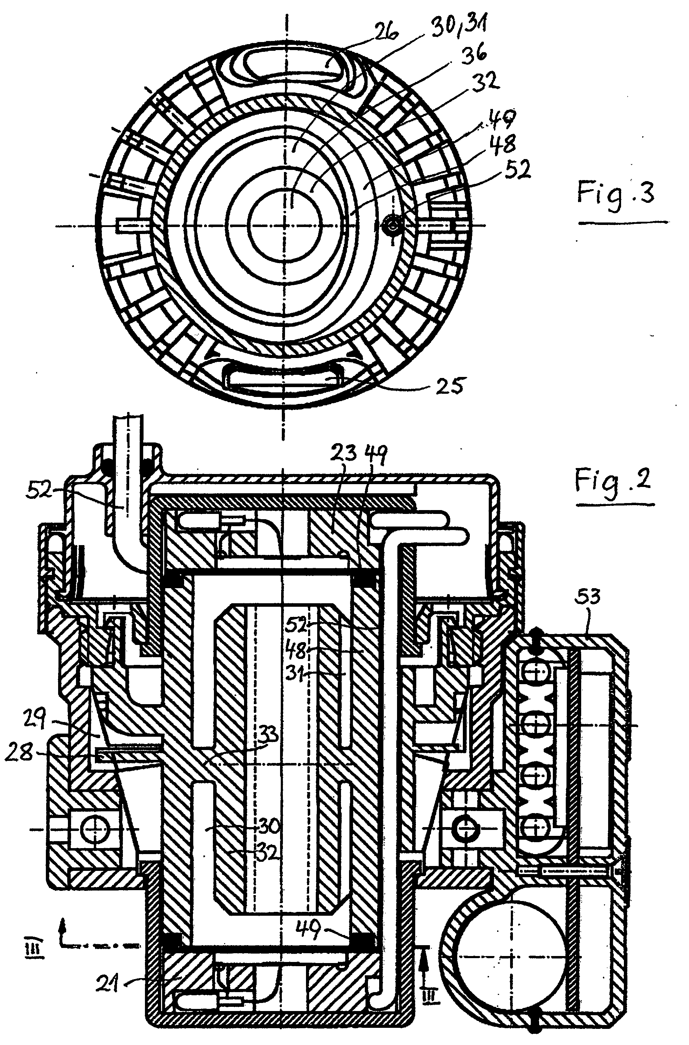

In Fig. 2 und 3 erkennt man die Kabelführung von dem unteren Endstück 21 zum oberen Endstück 23 der Kapsel. Die Wand 48 des Meßrohrs, die die Seitenkanäle 30, 31 außen begrenzt, ist - wie in Fig. 3 rechts erkennbar - auf einer Seite ein wenig exzentrisch nach innen hin zurückgenommen. Das gilt auch für den Verlauf der Dichtungen 49 zwischen den stirnseitigen Enden dieser Wand und den Endstücken 21, 23 der Kapsel. Dadurch wird Platz geschaffen für eine Bohrung 52, die die Endstücke durch das Mittelstück hindurch verbindet. Diese Lösung wird dadurch möglich, daß diese Bohrung bzw. die Räume, mit denen sie kommuniziert, durch die Dichtungen 49 zwischen dem Kapselmittelstück und den Endstücken einerseits und die Dichtungen 27 an den Kapselöffnungen 25, 26 andererseits von sämtlichen mediumführenden Räumen getrennt ist. So läßt sich die Kapsel mit einseitiger Kabelzuführung ausbilden.

Hervorzuheben ist, daß im Mittelstück 20 die Wände 48, alle mit der Aufnahme bzw. dem Gehäuse 1 zusammenwirkenden Teile, die Diagonalwand 33 und das Meßrohr 32 (oder Teile, die ein auswechselbares Meßrohr halten) einstückig zusammengefaßt sind, was im Hinblick auf die Fertigungskosten einen erheblichen Vorteil darstellt.

Fig. 2 zeigt, daß an das Gehäuse 1 gewünschtenfalls ein Zählwerk 53 oder dergleichen angesetzt werden kann.

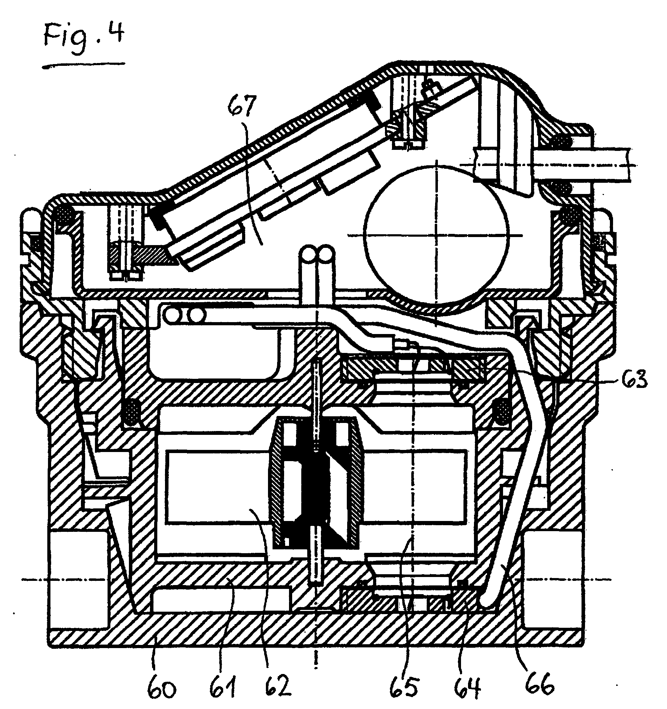

Die weitere Ausführungsform gemäß Fig. 4 besitzt ein Gehäuse 60 und eine darin eingesetzte Kapsel 61. Die nicht dargestellten Zulauf- und Auslaufstutzen des Gehäuses und die entsprechenden Öffnungen der Kapsel sind so miteinander verbunden, wie dies unter Bezugnahme auf Fig. 1 bis 3 erläutert wurde.

Abweichend davon enthält die Kapsel 61 ein Flügelrad 62 als Meßorgan, dessen Bewegung durch ein Geber/Empfänger-Paar 63, 64 abgetastet wird, die beiderseits des Flügelrads angeordnet sind. Es wird der Durchgang der Flügel durch die Meßstrecke 65 festgestellt. Die Kabel 66 von dem unteren Geber bzw. Empfänger 64 werden durch diejenigen Räume zwischen der Kapsel 61 und der im Gehäuse 60 gebildeten Aufnahme zu der Seite des anderen Gebers bzw. Empfängers 63 geführt, die dank den die Strömungsverbindungen umschließenden Dichtungen mediumsfrei sind. Im Oberteil 67 der Kapsel können weitere Komponenten zur Weiterleitung und/oder Anzeige des Meßsignals sowie zur Kabeldurchführung vorgesehen sein. Das Beispiel zeigt, daß Anspruch 5 einen ggf. von den übrigen Ansprüchen unabhängigen Schutz verdient.

## Patentansprüche

1. Durchflußmeßgerät für fluide Medien mit einem einen Zulaufanschluß (2) und einen Auslaufanschluß (3) aufweisenden Gehäuse, das eine Meßstrecke (36) mit einem Meßrohr (32) enthält, das zwei Verteilkammern (34, 35) verbindet, die jeweils mit einem der beiden Anschlüsse (2, 3) über im wesentlichen neben dem Meßrohr (32) gelegene Seitenkanäle (30, 31) verbunden sind, **dadurch gekennzeichnet, daß** das Meßrohr (32), die Verteilkammern (34, 35) und die Seitenkanäle (30, 31) Teil einer von dem Gehäuse (1) gesonderten und als Einheit in eine im Gehäuse (1) vorgesehene Kapselaufnahme einsetzbaren Kapsel (7) sind, daß die Seitenkanäle (30, 31) mit den Anschlüssen (2, 3) über an der Kapsel (7) und in der Kapselaufnahme angeordnete Öffnungspaare (13, 25 bzw. 26, 14) verbunden sind, daß die Kabel (66) zu einer Seite der Kapsel (7) abgeführt sind und daß die Kapsel (7, 61) an ihrem fern der Kabelabführungsseite des Geräts bzw. der Kapsel liegenden Ende einen kabelversorgten Geber/Empfänger (21, 64) aufweist und die Kapsel außerhalb der mit der Kapselaufnahme dicht zusammenwirkenden Öffnungspaare (13, 25 bzw. 26, 12) mediumsfreie Räume der Kapselaufnahme einschließt und die Kabel des kabelversorgten Gebers/Empfängers (21, 64) durch diese Räume oder damit innerhalb der Kapsel verbundene Räume zur Kabelabführungsseite verlaufen.

2. Durchflußmeßgerät nach Anspruch 1, **dadurch gekennzeichnet, daß** die Kapselaufnahme beiderseits offen ist und die Kapsel (7) daraus mit mindestens einem ihrer Enden herausragt.

3. Durchflußmeßgerät nach Anspruch 1 oder 2, **dadurch gekennzeichnet, daß** die Kapsel mindestens einen Deckel (22, 24) aufweist, der durch Zusammenwirken mit am Gehäuse (1) vorgesehenen Haltemitteln (45, 46) gegen inneren Überdruck gesichert ist.

4. Durchflußmeßgerät nach Anspruch 3, **dadurch gekennzeichnet, daß** die Deckel (22, 24) durch dieselben plombierbaren Mittel (9, 10) an der Kapsel (7) gesichert ist, die die Kapsel (7) in der Aufnahme sichern.

5. Durchflußmeßgerät nach einem der Ansprüche 1 bis 3, **dadurch gekennzeichnet, daß** die Meßstrecke quer zur Richtung des Zulauf- und/oder Auslaufanschlusses (2, 3) angeordnet ist.

## Claims

1. Flowmeter for fluid media, comprising a housing having an inlet connection (2) and an outlet connection (3) and which contains a measuring section (36) with a measuring tube (32) which connects two distribution chambers (34, 35) which are each connected to one of the two connections (2, 3) by side channels (30, 31) placed substantially beside the measuring tube (32), **characterized in that** the measuring tube (32), the distribution chambers (34, 35) and the side channels (30, 31) are part of a capsule (7) which is separate from the housing (1) and can be inserted as a unit into a capsule holder provided in the housing (1), **in that** the side channels (30, 31) are connected to the connections (2, 3) via pairs of openings (13, 25 and 26, 14) arranged on the capsule (7) and in the capsule holder, **in that** the cables (66) are led away to one side of the capsule (7), and **in that** the capsule (7, 61), at its end lying away from the cable output side of the instrument or the capsule has a cable-supplied transmitter/receiver (21, 64) and the capsule encloses medium-free spaces of the capsule holder outside the pairs of openings (13, 25 and 26, 12) interacting closely with the capsule holder, and the cables of the cable-supplied transmitter/receiver (21, 64) run to the cable output side through these spaces or spaces connected thereto within the capsule.

2. Flowmeter according to Claim 1, **characterized in that** the capsule holder is open on both sides, and the capsule (7) projects therefrom with at least one of its ends.

3. Flowmeter according to Claim 1 or 2, **characterized in that** the capsule has at least one cover (22, 24), which is secured against internal overpressure by interacting with holding means (45, 46) provided on the housing (1).

4. Flowmeter according to Claim 3, **characterized in that** the cover (22, 24) is secured on the capsule (7) by the same means (9, 10) which can be lead-sealed and which secure the capsule (7) in the holder.

5. Flowmeter according to one of Claims 1 to 3, **characterized in that** the measuring section is arranged transversely with respect to the inlet and/or outlet connection (2, 3).

## Revendications

1. Débitmètre pour milieux fluides comprenant un boîtier présentant un raccord d'entrée (2) et un raccord de sortie (3), qui contient une section de mesure (36) avec un tube de mesure (32) qui relie deux chambres de distribution (34, 35) qui sont connectées à chaque fois à l'un des deux raccords (2, 3) par le biais de conduits latéraux (30, 31) placés essentiellement à côté du tube de mesure (32), **caractérisé en ce que** le tube de mesure (32), les chambres de distribution (34, 35) et les conduits latéraux (30, 31) font partie d'une capsule (7) séparée du boîtier (1) et pouvant être utilisée en tant qu'unité dans un logement de capsule prévu dans le boîtier (1), **en ce que** les conduits latéraux (30, 31) sont connectés aux raccords (2, 3) par le biais de paires d'ouvertures (13, 25, respectivement 26, 14) disposées sur la capsule (7) et dans le logement de capsule, **en ce que** les câbles (66) sont sorties d'un côté de la capsule (7) et **en ce que** la capsule (7, 61), à son extrémité se trouvant éloignée du côté de sortie de câbles du dispositif ou de la capsule, présente un détecteur/récepteur (21, 64) alimenté par câble, et la capsule en dehors des paires d'ouvertures (13, 25, respectivement 26, 12) coopérant de manière étanche avec le logement de capsule, entoure des espaces exempts de fluide du logement de capsule et les câbles du détecteur/récepteur (21, 64) alimenté par câble s'étendent à travers ces espaces ou à l'intérieur des espaces connectés à la capsule vers le côté de sortie des câbles.

2. Débitmètre selon la revendication 1, **caractérisé en ce que** le logement de capsule est ouvert des deux côtés et la capsule (7) en dépasse avec au moins l'une de ses extrémités.

3. Débitmètre selon la revendication 1 ou 2, **caractérisé en ce que** la capsule présente au moins un couvercle (22, 24) qui est protégé contre les surpressions internes par coopération avec des moyens de fixation (45, 46) prévus sur le boîtier (1).

4. Débitmètre selon la revendication 3, **caractérisé en ce que** le couvercle (22, 24) est fixé sur la capsule (7) par ces mêmes moyens plombables (9, 10), qui fixent la capsule (7) dans le logement.

5. Débitmètre selon l'une quelconque des revendications 1 à 3, **caractérisé en ce que** la section de mesure est disposée transversalement à la direction du raccord d'entrée et/ou du raccord de sortie (2, 3).
